# EUROPÄISCHE PATENTANMELDUNG

(11) **EP 4 730 141 A1**
(43) Veröffentlichungstag der Anmeldung: **22.04.2026**
(21) Anmeldenummer: 24206762.7
(22) Anmeldetag: 15.10.2024
(51) Int. Cl.: G06F 11/3668

(54) **VERFAHREN UND VORRICHTUNG ZUM TESTEN EINES DATENBANKVERWALTUNGSSYSTEMS SOWIE DATENBANKVERWALTUNGSSYSTEM**

(71) Anmelder: Fraunhofer-Gesellschaft zur Förderung der angewandten Forschung e.V., 80686 München (DE)
(72) Erfinder: Weber, Ingo, Prof., 80686 München (DE); Detje, Martin, Dr., 80686 München (DE)
(74) Vertreter: Ramrath, Lukas

(57) **Zusammenfassung**

Verfahren und Vorrichtung zum Testen eines Datenbankverwaltungssystems sowie Datenbankverwaltungssystem

Die Erfindung betrifft ein Verfahren zum Testen eines

Datenbankverwaltungssystems (100), umfassend die Schritte:
- Bereitstellen (S1) mindestens eines Testdatenobjekts,
- Testen (S2) des Datenbankverwaltungssystems (100) in Abhängigkeit des mindestens einen Testdatenobjekts,

wobei das mindestens eine Testdatenobjekt durch eine Nutzung mindestens eines bereits verifizierten Datenbankverwaltungssystems (200) bereitgestellt wird,
und eine Vorrichtung (300) zum Testen eines Datenbankverwaltungssystems (100) sowie ein Datenbankverwaltungssystem (100).

## Beschreibung

Die Erfindung betrifft ein Verfahren und eine Vorrichtung zum Testen eines Datenbankverwaltungssystems sowie ein Datenbankverwaltungssystem.

Moderne Datenbankverwaltungssysteme - wie z.B. Enterprise-Resource-Planning-System (ERP-Systeme) - spielen eine zentrale Rolle in der Verarbeitung von Daten in Unternehmen verschiedener Industriesektoren. Ein Datenbankverwaltungssystem kann dazu eingesetzt werden, Prozesse, wie z.B. Produktions- oder Geschäftsprozesse, zu steuern oder zu überwachen, um einen effizienten Einsatz von Ressourcen eines Unternehmens zu gewährleisten.

Ein Datenbankverwaltungssystem kann z.B. durch einen Anbieter oder Kunden des Datenbankverwaltungssystems überarbeitet werden, wenn sich ein Produktionsprozess oder Geschäftsprozess ändert oder turnusmäßige Veränderungen wie z.B. Updates dies notwendig machen. Das auf diese Weise überarbeitetes Datenbankverwaltungssystem muss jedoch vor einem Einsatz in der Produktion getestet werden, um z.B. eine Verarbeitung von Eingaben (Inputs) und die Korrektheit von Ausgaben (Outputs) des Datenbankverwaltungssystems gewährleisten zu können.

Aktuell kann jedoch nicht sichergestellt werden, dass ein Testen des Datenbankverwaltungssystems unter repräsentativen Umständen einer realen Anwendung des Datenbankverwaltungssystems erfolgt, da z.B. synthetische Daten eingesetzt werden, um Probleme mit der Offenlegung sensibler Informationen zu umgehen und das Testen an Dritte wie z.B. Dienstleister auslagern zu können. Hierbei ergibt sich daher nachteilig, dass ein solches Testen zu kostspieligen Fehlern in der realen Anwendung des Datenbankverwaltungssystems führen kann, da die reale Anwendung des Datenbankverwaltungssystems beim Testen nicht ausreichend abgebildet wird. Diese Unzulänglichkeiten beeinträchtigen somit die Zuverlässigkeit und Genauigkeit des Testens und können eine Testdauer unnötig verlängern, wenn Fehler ausgebessert werden müssen.

Es stellt sich somit das technische Problem, ein Verfahren und eine Vorrichtung zum Testen eines Datenbankverwaltungssystems zu schaffen, welche das Testen des Datenbankverwaltungssystems mit verbesserter Zuverlässigkeit, Genauigkeit und Schnelligkeit ermöglichen. Insbesondere stellt sich das technische Problem, ein mit diesen Vorteilen getestetes Datenbankverwaltungssystem bereitzustellen.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Verfahren zum Testen eines Datenbankverwaltungssystems, umfassend die Schritte:
- Bereitstellen mindestens eines Testdatenobjekts,
- Testen des Datenbankverwaltungssystems in Abhängigkeit des mindestens einen Testdatenobjekts,
wobei das mindestens eine Testdatenobjekt durch eine Nutzung mindestens eines bereits verifizierten Datenbankverwaltungssystems bereitgestellt wird.

Das Verfahren hat den technischen Effekt, dass mit Hilfe des Testdatenobjekts ein Bezug zu der realen Anwendung des Datenbankverwaltungssystems hergestellt wird, da das Testdatenobjekt auf der Nutzung eines bereits verifizierten Datenbankverwaltungssystems beruht, wodurch wiederum die eingangs beschriebenen Unzulänglichkeiten vermieden werden. Dies verbessert die Schnelligkeit, Zuverlässigkeit und Genauigkeit beim Testen des Datenbankverwaltungssystems.

Weiter vorgeschlagen wird eine Vorrichtung zum Testen eines Datenbankverwaltungssystems, wobei die Vorrichtung dazu ausgebildet ist, ein Verfahren gemäß einer in dieser Offenbarung beschriebenen Ausführungsform auszuführen. Die Vorrichtung kann insbesondere dazu ausgebildet sein, einen, mehrere, oder alle Schritte des in dieser Offenbarung beschriebenen Verfahrens auszuführen. Die Vorrichtung kann mindestens eine Recheneinrichtung - wie z.B. einen Mikroprozessor oder eine integrierte Schaltung - und mindestens eine Speichereinrichtung - wie z.B. einen RAM und/oder einen Flashspeicher - umfassen. Die Vorrichtung kann insbesondere eine Kommunikationsschnittstelle, z.B. eine API-Schnittstelle, umfassen, um mit dem zu testenden Datenbankverwaltungssystem und/oder dem verifizierten Datenbankverwaltungssystem zu kommunizieren.

Weiter vorgeschlagen wird ein Datenbankverwaltungssystem, welches durch ein Verfahren gemäß einer in dieser Offenbarung beschriebenen Ausführungsform getestet ist. Das Datenbankverwaltungssystem kann insbesondere mittels der Vorrichtung getestet werden.

Weiter vorgeschlagen wird ein Testprogramm, welches, wenn es z.B. auf oder durch einen Computer ausgeführt wird, den Computer veranlasst, einen, mehrere oder alle Schritte des in dieser Offenbarung beschriebenen Verfahrens auszuführen. Der Computer kann z.B. die zuvor erläuterte Vorrichtung oder eine Recheneinrichtung im Sinne dieser Offenbarung sein. Alternativ oder kumulativ wird ein Programmspeichermedium oder Computerprogrammprodukt beschrieben, auf oder in dem das Testprogramm gespeichert ist, insbesondere in einer nicht vorübergehenden, z.B. in einer dauerhaften, Form. Alternativ oder kumulativ wird ein Computer vorgeschlagen, der dieses Programmspeichermedium umfasst. Weiter alternativ oder kumulativ wird ein Signal vorgeschlagen, beispielsweise ein digitales Signal, welches Informationen kodiert, die das Programm repräsentieren und welches Mittel umfasst, die adaptiert sind, einen, mehrere oder alle Schritte des in dieser Offenbarung dargestellten Verfahrens auszuführen. Das Signal kann ein physikalisches Signal, zum Beispiel ein elektrisches Signal sein, welches insbesondere technisch oder maschinell erzeugt wird.

Die im Rahmen dieser Offenbarung für das Verfahren angeführten technischen Effekte und Vorteilen treffen selbstverständlich auch auf die Vorrichtung, das Datenbankverwaltungssystem sowie das Testprogramm zu und umgekehrt.

Das zu testende Datenbankverwaltungssystem kann z.B. eine neuere Version des verifizierten Datenbankverwaltungssystems sein. Das zu testende Datenbankverwaltungssystem kann als Test-Datenbankverwaltungssystem bezeichnet werden. Das verifizierte Datenbankverwaltungssystem kann als Produktiv-Datenbankverwaltungssystem (Prod-Datenbankverwaltungssystem) bezeichnet werden. Das verifizierte Datenbankverwaltungssystem und/oder das zu testende Datenbankverwaltungssystem kann/können jeweils mindestens eine Systemkomponente und/oder mindestens eine Datenbankkomponente aufweisen. Die Systemkomponente kann eine Softwarekomponente sein und z.B. ein Backend und/oder Frontend des Datenbankverwaltungssystems sein bzw. realisieren. Die Datenbankkomponente kann ebenfalls eine Softwarekomponente sein, wie z.B. eine SQL-Datenbank oder NoSQL-Datenbank. Insbesondere kann die Datenbankkomponente eine SAP-HANA-Datenbank sein bzw. realisieren. Das verifizierte Datenbankverwaltungssystem kann z.B. eine verifizierte Systemkomponente und eine verifizierte Datenbankkomponente aufweisen. Das zu testende Datenbankverwaltungssystem kann z.B. eine zu testende Systemkomponente und eine verifizierte Datenbankkomponente aufweisen. Diese verifizierte Datenbankkomponente kann insbesondere auch von dem verifizierten Datenbankverwaltungssystem genutzt werden. Alternativ kann das zu testende Datenbankverwaltungssystem eine zu testende Systemkomponente und eine, insbesondere zu Testzwecken bereitgestellte, Test-Datenbankkomponente aufweisen. Die Komponenten des jeweiligen Datenbankverwaltungssystems können ein verteiltes System bilden oder durch Komponenten eines verteilten Systems bereitgestellt werden, wobei die Kommunikation zwischen den Komponenten drahtlos oder drahtgebunden erfolgen kann. Das jeweilige Datenbankverwaltungssystem oder zumindest eine Komponente des jeweiligen Datenbankverwaltungssystems kann auf der zuvor erwähnten Vorrichtung ausgeführt bzw. gehostet werden, z.B. zum Zwecke des Testens. Alternativ kann das jeweilige Datenbankverwaltungssystem auf einem Server ausgeführt bzw. gehostet werden. Weiter alternativ kann das Datenbankverwaltungssystem eigene Hardwarekomponenten, wie z.B. jeweils mindestens eine Recheneinrichtung und/oder mindestens eine Speichereinrichtung aufweisen. Die Softwarekomponenten des jeweiligen Datenbankverwaltungssystems können in diesem Fall z.B. auf der Recheneinrichtung des Datenbankverwaltungssystems ausgeführt werden und auf der Speichereinrichtung gespeichert werden.

Das Testdatenobjekt kann mindestens einen Wert - z.B. in Form einer Zahl und/oder eines Texts - umfassen bzw. kodieren oder repräsentieren. Das Testdatenobjekt kann als Zahl z.B. einen mit einem Prozess oder einem Projekt erzielten Umsatz und/oder eine Stückzahl eines Produkts, eine Personal- oder Reisekostenhöhe, eine Anzahl von Arbeits- oder Reisetagen oder ähnliches umfassen. Das Testdatenobjekt kann als Text z.B. eine Bezeichnung eines Prozesses, Projekts, Produkts, einen Namen eines Nutzers oder Mitarbeiters oder einer Abteilung umfassen. Das Testdatenobjekt kann aber auch einen Produktions- oder Geschäftsprozess teilweise oder vollständig repräsentieren.

Das Testdatenobjekt kann insbesondere durch eine Eingabe (Input) in das verifizierte und/oder zu testende Datenbankverwaltungssystem und/oder eine Ausgabe (Output) aus dem verifizierten und/oder zu testenden Datenbankverwaltungssystem erzeugt werden. Weiter kann das Testdatenobjekt einen Zeitpunkt bzw. einen Zeitstempel umfassen, zu welchem die Eingabe und/oder die Ausgabe erfolgt ist oder erfolgen soll. Die Eingabe, Ausgabe und/oder der Zeitpunkt kann/können auch als Event oder Ereignis bezeichnet werden. Weiter kann das Testdatenobjekt eine Nutzerinformation und/oder Zugriffsrechte umfassen. Beispielsweise kann das Testdatenobjekt angeben, welcher Nutzer mit welchem Zugriffsrecht zu welchem Zeitpunkt welche Eingabe in Bezug auf welchen Prozess getätigt hat. Das Zugriffsrecht kann ein Lese- und/oder Schreibrecht sein und nutzerspezifisch sein. Das Testdatenobjekt kann z.B. eine objektspezifische Kennung (ID) und/oder wertespezifische Kennung (ID) umfassen, um das Testdatenobjekt oder die Werte des Testdatenobjekts eindeutig identifizierbar zu machen. Das Testdatenobjekt kann technisch derart ausgebildet sein, dass es in binärer Form kodiert ist, z.B. als Byte, um es z.B. in einer Recheneinrichtung verarbeiten und/oder in einer Speichereinrichtung speichern zu können. Ein im Kontext dieser Offenbarung beschriebenes Datenobjekt und/oder Ausgabedatenobjekt kann ein, mehrere oder alle der gemäß dieser Offenbarung angeführten Merkmal(e) des Testdatenobjekts aufweisen, mutatis mutandis.

Das Bereitstellen des Testdatenobjekts kann z.B. durch ein Auslesen eines Datenobjekts aus der Datenbankkomponente des verifizierten Datenbankverwaltungssystems erfolgen. Dies wird im Folgenden noch näher erläutert. Das Auslesen des Datenobjekts aus der Datenbankkomponente des verifizierten Datenbankverwaltungssystems kann insbesondere unter Nutzung des verifizierten Datenbankverwaltungssystems erfolgen. Insbesondere kann das Testdatenobjekt durch Nutzung mehrerer bereits verifizierter Datenbankverwaltungssysteme bereitgestellt werden, um ein möglichst repräsentatives Testdatenobjekt bereitzustellen.

Das Testen des Datenbankverwaltungssystems kann z.B. durch Ausführen des Testprogramms auf der eingangs genannten Vorrichtung erfolgen. Das Testprogramm kann z.B. zumindest einen in dem Testdatenobjekt enthaltenen Wert zugreifen. Das Testprogramm kann z.B. eine Eingabe gemäß dem Testdatenobjekt an das zu testende Datenbankverwaltungssystem senden und eine Ausgabe des zu testenden Datenbankverwaltungssystems durch einen Abgleich mit dem Testdatenobjekt auswerten, um zu prüfen, ob das zu testende Datenbankverwaltungssystem korrekt arbeitet. Eine Eingabe gemäß dem Testdatenobjekt kann insbesondere eine Eingabe oder ein Ereignis sein, welche/s zur Erzeugung des Testdatenobjekts führte.

In einer Ausführungsform wird mindestens ein Datenobjekt aus mindestens einer verifizierten Datenbankkomponente als das mindestens eine Testdatenobjekt bereitgestellt. Auf diese Weise kann sichergestellt werden, dass das Testdatenobjekt aktuell und korrekt ist. Dies verbessert die Genauigkeit beim Testen des Datenbankverwaltungssystems zusätzlich. Die verifizierte Datenbankkomponente kann z.B. eine Produktionsdatenbank sein, die in einer realen Anwendung des verifizierten Datenbankverwaltungssystems genutzt wird. Dann kann ein Abgleich des Testdatenobjekts mit einem unter Nutzung des zu testenden Datenbankverwaltungssystems erzeugten Datenobjekts erfolgen. Das zu testende Datenbankverwaltungssystem kann erfolgreich getestet werden, wenn dieses Datenobjekt dem Testdatenobjekt entspricht oder weniger als ein vorbestimmtes Maß davon abweicht. Rein exemplarisch kann ein solches Testdatenobjekt als eine Ausgabe (Output) aus dem verifizierten Datenbankverwaltungssystem und das unter Nutzung des zu testenden Datenbankverwaltungssystems erzeugte Datenobjekt als eine Ausgabe (Output) aus dem zu testenden Datenbankverwaltungssystem erzeugt werden. Weicht das Datenobjekt mehr als ein vorbestimmtes Maß von dem Testdatenobjekt ab, so kann das zu testenden Datenbankverwaltungssystem nicht erfolgreich getestet worden sein.

In einer Ausführungsform greift das zu testende Datenbankverwaltungssystem, insbesondere die zu testende Systemkomponente, gemäß mindestens einer modifizierten Vorgabe mindestens einer Zugriffsverwaltungskomponente auf die verifizierte Datenbankkomponente zu. Auf diese Weise kann der Zugriff auf die verifizierte Datenbankkomponente z.B. gegenüber dem Zugriff einer verifizierten Systemkomponente eingeschränkt werden, um eine Kompromittierung der verifizierten Datenbankkomponente zu verhindern. Dies verbessert die Sicherheit beim Testen des Datenbankverwaltungssystems. Die Zugriffsverwaltungskomponente kann als weitere Softwarekomponente des verifizierten Datenbankverwaltungssystems und/oder des zu testenden Datenbankverwaltungssystems ausgebildet sein und z.B. als Identity-Access-Management (IAM) bezeichnet werden. Die verifizierte Datenbankkomponente kann eine Komponente des verifizierten Datenbankverwaltungssystems und/oder eine Komponente des zu testenden Datenbankverwaltungssystems sein. Insbesondere kann das zu testende Datenbankverwaltungssystem parallel zu einer im Betrieb befindlichen Systemkomponente des verifizierten Datenbankverwaltungssystems betrieben werden. Ein Zugriff auf die verifizierte Datenbankkomponente gemäß der modifizierten Vorgabe kann z.B. erfolgen, indem das Datenobjekt aus der verifizierten Datenbankkomponente ausgelesen wird und als Testdatenobjekt bereitgestellt wird. Durch die modifizierte Vorgabe kann für den Zugriff auf die verifizierten Datenbankkomponenten ein ausschließliches Leserecht festgelegt sein. Hierdurch kann vermieden werden, dass z.B. eine Systemkomponente des zu testenden Datenbankverwaltungssystems ein nichtverifiziertes Datenobjekt in die verifizierte Datenbankkomponente schreiben kann. Die modifizierte Vorgabe kann nutzerunspezifisch oder nutzerspezifisch gültig sein. Beispielsweise kann die modifizierte Vorgabe einen ausschließlich lesenden Zugriff auf dieselben Datenobjekte wie ein Nutzer des verifizierten Datenbankverwaltungssystems ermöglichen. Mit anderen Worten ermöglicht die modifizierte Vorgabe einen nutzerspezifischen Zugriff auf Datenobjekte, wobei dieser Zugriff jedoch ausschließlich lesend erfolgen darf.

Die modifizierte Vorgabe kann insbesondere zugriffsbeschränkt sein - d.h. der Zugriff kann auf eine vorbekannte Menge an Datenobjekten beschränkt sein, z.B. eine größere Menge, gleiche Menge, oder geringere Menge an Datenobjekten als ein Nutzer des verifizierten Datenbankverwaltungssystems. Hierdurch kann ein Zugriff auf sensible Daten beschränkt werden. Die modifizierte Vorgabe kann alternativ zugriffsunbeschränkt sein - d.h. der Zugriff kann auf auf alle Datenobjekte des verifizierten Datenbankverwaltungssystems erfolgen. Hierdurch kann das Bereitstellen des Testdatenobjekts ohne Zugriffsprobleme erfolgen. Die Systemkomponente des verifizierten Datenbankverwaltungssystems kann hingegen gemäß mindestens einer originären Vorgabe der mindestens einen Zugriffsverwaltungskomponente auf die verifizierte Datenbankkomponente zugreifen. Die originäre Vorgabe kann z.B. mindestens ein Schreib- und/oder Leserrecht festlegen, wobei die Schreib- und/oder Leserrechte nutzerspezifisch sein können und insbesondere zugriffsbeschränkt sein können.

Beispielsweise kann eine Systemkomponente des verifizierten Datenbankverwaltungssystems ein Datenobjekt in die verifizierte Datenbankkomponente schreiben, auf welches sodann durch das zu testende Datenbankverwaltungssystem zugriffen wird, insbesondere ausschließlich lesend.

In einer Ausführungsform wird durch das Testen mindestens ein Ausgabedatenobjekt erzeugt, wobei das mindestens eine Ausgabedatenobjekt in Abhängigkeit des mindestens einen Testdatenobjekts verifiziert wird. Auf diese Weise kann die korrekte Funktionsweise des Datenbankverwaltungssystems bestätigt werden bzw. das zu testende Datenbankverwaltungssystem erfolgreich getestet werden. Dies verbessert die Zuverlässigkeit beim Testen des Datenbankverwaltungssystems. Das mindestens eine Ausgabedatenobjekt kann z.B. einen Wert umfassen, der auf eine Eingabe in das zu testende Datenbankverwaltungssystem hin erzeugt wird. Das Verifizieren des Ausgabedatenobjekts kann erfolgen, indem das Ausgabedatenobjekt mit dem Testdatenobjekt verglichen wird. Beispielsweise kann der Wert des Ausgabedatenobjekts mit einem entsprechenden Wert des Testdatenobjekts abgeglichen werden. Das Verifizieren kann alternativ oder kumulativ eine Überprüfung der Konsistenz des Ausgabedatenobjekts umfassen. Zum Beispiel kann verifiziert werden, ob das Ausgabedatenobjekt einen gleichen oder ähnlichen Aufbau und/oder ein gleiches oder ähnliches Datenformat aufweist wie das Testdatenobjekt. Das Verifizieren kann gemäß einem Schwellenwertkriterium erfolgen, wobei das Schwellenwertkriterium z.B. erfüllt ist, wenn der Wert des Ausgabedatenobjekts um nicht mehr als einen vorbekannten Schwellenwert von dem Wert des Testdatenobjekts abweicht. Ein Ergebnis des Verifizierens kann sein, dass das zu testende Datenbankverwaltungssystem als verifiziert klassifiziert wird - z.B. wenn das Schwellenwertkriterium erfüllt ist - oder dass das zu testende Datenbankverwaltungssystem als fehlerhaft klassifiziert wird - z.B. wenn das Schwellenwertkriterium nicht erfüllt ist. Insbesondere kann ein erfolgreiches Verifizieren dazu führen, dass das zu testende Datenbankverwaltungssystem als verifiziertes Datenbankverwaltungssystem freigegeben wird.

In einer Ausführungsform wird mindestens eine Sequenz von Datenobjekten durch die Nutzung des bereits verifizierten Datenbankverwaltungssystems erzeugt, wobei das mindestens eine Testdatenobjekt als mindestens ein Datenobjekt der mindestens einen Sequenz bereitgestellt wird. Auf diese Weise kann sichergestellt werden, dass das Testdatenobjekt Teil eines echten Produktions- oder Geschäftsprozesses ist. Dies verbessert die Zuverlässigkeit und Genauigkeit beim Testen des Datenbankverwaltungssystems. Die Sequenz kann eine Struktur aufweisen, die eine chronologische und/oder kausale Abfolge von Prozessschritten des Produktions- oder Geschäftsprozesses repräsentiert. Die Sequenz kann daher auch als Spur oder Belegkette bezeichnet werden. Die Sequenz kann z.B. durch einen Schritt des Process-Mining erzeugt werden. Der Schritt des Process-Mining ist dem Fachmann bekannt. Im Sinne dieser Erfindung kann eine solche Sequenz genau ein, vorzugsweise aber mehrere, Datenbankobjekte umfassen.

Jedes Datenobjekt der Sequenz kann z.B. einen Prozessschritt repräsentieren. Jedem Datenobjekt der Sequenz kann innerhalb der Sequenz eine Position zugeordnet sein. Hierdurch kann z.B. eine Abfolge von Produktionsschritten in der Produktion eines Produkts, Lieferschritten in der Lieferung eines Produkts, Behandlungsschritten in der Behandlung eines Patienten und/oder Bearbeitungsschritten in der Bearbeitung eines Falls durch einen Anwalt nachvollziehbar gemacht werden. Die Sequenz kann derart erzeugt werden, dass die Datenobjekte datentechnisch miteinander verknüpft sind. Die Verknüpfung kann z.B. mit Hilfe der datenobjektspezifischen Kennung (ID) eines Datenobjekts erfolgen. Hierdurch kann die chronologische und/oder kausale Nachvollziehbarkeit der Prozessschritte gewährleistet werden. Die Sequenz kann ihrerseits z.B. eine sequenzspezifische Kennung (ID) umfassen, um die Sequenz und/oder die darin enthaltenden Datenobjekte eindeutig identifizierbar zu machen.

In einer Ausführungsform wird mindestens eine Sequenz von Datenobjekten als Sequenz von Testdatenobjekten für das Testen bereitgestellt. Auf diese Weise kann auf dem zu testenden Datenbankverwaltungssystem eine aus dem verifizierten Datenbankverwaltungssystem bekannte Abfolge von Prozessschritten getestet werden. Dies verbessert die Zuverlässigkeit und Genauigkeit beim Testen des Datenbankverwaltungssystems. Insbesondere kann mit Hilfe der Sequenz ein Produktions- oder Geschäftsprozess beim Testen komplett durchlaufen und somit getestet werden. Die bereitgestellte Sequenz kann die zuvor erläuterten Eigenschaften der durch die Nutzung des verifizierten Datenbankverwaltungssystems erzeugten Sequenz aufweisen. Mit anderen Worten: Die bereitgestellte Sequenz kann dieselben Eigenschaften wie die mittels des verifizierten Datenbankverwaltungssystems erzeugte Sequenz aufweisen. Die Sequenz kann beispielsweise in das Testen eingebunden werden, indem Eingaben in das zu testende Datenbankverwaltungssystem gemäß der zuvor erläuterten Struktur der Sequenz erfolgen, um eine aus dem verifizierten Datenbankverwaltungssystem bekannte Abfolge von Prozessschritten beizubehalten.

In einer Ausführungsform weist die mindestens eine Sequenz mindestens eine invariante Eigenschaft auf, wobei die Datenobjekte der mindestens einen Sequenz transformiert werden, bevor die mindestens eine Sequenz als Sequenz von Testdatenobjekten bereitgestellt wird, wobei durch das Transformieren die mindestens eine invariante Eigenschaft erhalten bleibt. Auf diese Weise können die Datenobjekte der Sequenz verändert werden, ohne z.B. die Struktur oder Abfolge der Sequenz zu verändern. Dies verbessert die Zuverlässigkeit beim Testen des Datenbankverwaltungssystems. Insbesondere kann durch das Transformieren ein Speicherbedarf der transformierten Datenobjekte im Vergleich zu dem Speicherbedarf der nicht transformierten Datenobjekte reduziert werden. Das Transformieren kann auch sinnvoll sein, wenn die Werte der Datenobjekte sensible Informationen enthalten, die durch die Transformation desensibilisiert werden. Hierdurch kann z.B. eine anonymisierte Sequenz von Testdatenobjekten bereitgestellt werden, wobei diese insbesondere geringeren Speicherbedarf aufweisen kann. Die invariante Eigenschaft kann z.B. die Struktur der Sequenz selbst sein. Die Struktur kann beispielsweise invariant sein, da die chronologische und/oder kausale Abfolge, in welcher die Datenobjekte der Sequenz miteinander verknüpft sind, durch die Transformation nicht verändert wird. Die invariante Eigenschaft kann aber auch eine Anzahl der in einer Sequenz enthaltenden Datenobjekte sein, die durch die Transformation erhalten bleibt. Die invariante Eigenschaft kann ferner eine Verknüpfung von Eigenschaften der Datenobjekte der Sequenz sein, z.B. eine Summe von aufzusummierenden Werten der Datenobjekte der Sequenz sein, wie z.B. eine Summe der Gesamtkosten der Produktion eines Produkts, Personalkosten, Reisekosten oder ähnliches. Insbesondere kann nach der Transformation der Datenobjekte überprüft werden, ob die transformierten Datenobjekte ein Transformationskriterium erfüllen. Das Transformationskriterium kann beispielsweise erfüllt sein, wenn die invariante Eigenschaft nach dem Transformieren der Datenobjekte erhalten ist. Hierdurch kann das Transformieren plausibilisiert werden.

In einer Ausführungsform wird eine Vielzahl von Sequenzen von Datenobjekten durch die Nutzung des bereits verifizierten Datenbankverwaltungssystems erzeugt, wobei aus der Vielzahl von Sequenzen mindestens eine (Unter)Menge von relevanten Sequenzen identifiziert wird, wobei die bereitgestellte mindestens eine Sequenz eine Sequenz dieser Menge ist. Auf diese Weise kann die Qualität der bereitgestellten Sequenz verbessert werden, da eine Relevanz der Sequenz berücksichtigt werden kann. Dies verbessert die Zuverlässigkeit und Genauigkeit beim Testen des Datenbankverwaltungssystems. Eine Sequenz kann als relevant identifiziert werden, wenn die Sequenz eine Eigenschaft aufweist, die z.B. mit einer vorbekannten (Mindest)Häufigkeit in der Vielzahl der erzeugten Sequenzen auftritt. Eine Sequenz kann insbesondere als relevant identifiziert werden, wenn die Sequenz die zuvor erläuterte invariante Eigenschaft aufweist. Das Identifizieren der Menge von relevanten Sequenzen kann z.B. mittels eines Relevanzkriteriums erfolgen. Beispielsweise kann das Relevanzkriterium erfüllt sein, wenn eine Sequenz eine Eigenschaft - wie z.B. eine Struktur, ein Datenobjekt und/oder einen Wert aufweist, die mit einer vorbekannten (Mindest)Häufigkeit in der Vielzahl von Sequenzen vorkommt. Hierdurch kann eine statistisch repräsentative Sequenz von Testdatenobjekten bereitgestellt werden, wobei der Speicherbedarf für diese repräsentative(n) Sequenz(en) im Vergleich zur Nutzung aller Sequenzen reduziert wird. Das Identifizieren der Menge von relevanten Sequenzen kann regelbasiert oder mit Hilfe eines Verfahrens des maschinellen Lernens, insbesondere unter Einsatz eines künstlichen neuronalen Netzes, erfolgen.

In einer Ausführungsform wird durch das Testen mindestens ein Ausgabedatenobjekt gemäß einer Sequenz mit mindestens einer invarianten Eigenschaft erzeugt, wobei das mindestens eine Ausgabedatenobjekt oder zumindest ein Teil davon gemäß der invarianten Eigenschaft erzeugt wird. Auf diese Weise kann sichergestellt werden, dass das Ausgabedatenobjekt z.B. in einer Position einer Sequenz von mehreren Ausgabedatenobjekten positioniert ist, welche mit einer durch die invariante Eigenschaft vorgegebenen Position eines Datenobjekts innerhalb der bereitgestellten Sequenz übereinstimmt. Dies verbessert die Genauigkeit beim Testen des Datenbankverwaltungssystems. Insbesondere wird durch das Testen mindestens eine Sequenz von Ausgabedatenobjekten erzeugt. Die mindestens eine Sequenz von Ausgabedatenobjekten kann weiter insbesondere gemäß der invarianten Eigenschaft erzeugt werden.

In einer Ausführungsform wird durch das Testen mindestens ein Ausgabedatenobjekt erzeugt, wobei das mindestens eine Ausgabedatenobjekt als mindestens ein weiteres Testdatenobjekt für ein weiteres Testen bereitgestellt wird. Auf diese Weise kann das Testen des Datenbankverarbeitungssystems iterativ ausgeführt werden. Dies verbessert die Zuverlässigkeit und Genauigkeit beim Testen des Datenbankverwaltungssystems. Beispielsweise kann das Ausgabedatenobjekt als Eingabe für einen anderen zu testenden Prozess bereitgestellt werden, sodass auch der andere Prozess durch das weitere Testen getestet werden kann. Auf das weitere Testen können die gleichen Eigenschaften zutreffen wie auf das in dieser Offenbarung beschriebene Testen, mutatis mutandis. Insbesondere wird durch das Testen mindestens eine Sequenz von Ausgabedatenobjekten erzeugt, wobei die mindestens eine Sequenz von Ausgabedatenobjekten als mindestens eine weitere Sequenz von Testdatenobjekten für das weitere Testen bereitgestellt wird.

In einer Ausführungsform greift eine Systemkomponente des zu testenden Datenbankverwaltungssystems gemäß mindestens einer veränderten Vorgabe mindestens einer Zugriffsverwaltungskomponente auf mindestens eine Datenbankkomponente des zu testenden Datenbankverwaltungssystems zu. Die veränderte Vorgabe ist hierbei insbesondere im Vergleich mit der Vorgabe, durch die der Zugriff der verifizierten Systemkomponente auf mindestens eine verifizierte Datenbankkomponente festgelegt ist, verändert. Auf diese Weise können durch die veränderte Vorgabe z.B. Zugriffe auf die Datenbankkomponente, die in dem verifizierten Datenbankverwaltungssystem nicht gestattet wären, während des Testens ermöglicht werden. Die veränderte Vorgabe kann z.B. ein unbeschränkter Zugriff auf die Datenbankkomponente sein.

In einer Ausführungsform erfolgt das Bereitstellen und/oder das Testen über mindestens eine API-Schnittstelle des zu testenden Datenbankverwaltungssystems. Auf diese Weise kann sichergestellt werden, dass das Bereitstellen und/oder das Testen unabhängig von z.B. einer Benutzeroberfläche oder einem Frontend des zu testenden Datenbankverwaltungssystems durchgeführt werden kann. Dies verbessert Anwendbarkeit des Verfahrens. Beispielsweise stellt die API-Schnittstelle ein standardisiertes Kommunikationsprotokoll wie z.B. REST, SOAP oder GraphQL bereit. Dies kann insbesondere die Kommunikation zwischen dem Testprogramm und dem zu testenden Datenbankverarbeitungssystem erleichtern. Die API-Schnittstelle kann insbesondere die API-Schnittstelle eines Backends des Datenbankverwaltungssystems sein.

In einer Ausführungsform erfolgt das Bereitstellen und/oder das Testen mittels Robotic Process Automation. Auf diese Weise kann sichergestellt werden, dass das Bereitstellen und/oder das Testen über ein Frontend bzw. eine Benutzeroberfläche des zu testenden Datenbankverwaltungssystems erfolgen kann. Dies verbessert Anwendbarkeit des Verfahrens. Die Robotic Process Automation kann mittels einer veränderten Vorgabe von Zugriffsrechten erfolgen, z.B. mit unbeschränkten Zugriffsrechten. Beispielsweise kann ein Robot bzw. Bot des Testprogramms Eingaben in das zu testende Datenbankverwaltungssystem gemäß dem Testdatenobjekt oder gemäß der Sequenz, insbesondere vollständig automatisiert, tätigen. Die Vorrichtung kann Mittel zur robotischen Prozessautomation aufweisen, um eine Robotic Process Automation bereitzustellen. Insbesondere kann das Bereitstellen über eine API-Schnittstelle des verifizierten Datenbankverwaltungssystems erfolgen und das Testen kann mittels Robotic Process Automation erfolgen. Selbstverständlich kann/können alternativ oder kumulativ ein oder mehrere Teilschritte des Verfahrens gemäß einer in dieser Offenbarung beschriebenen Ausführungsform mittels Robotic Process Automation ausgeführt werden. Beispielsweise kann/können eine oder mehrere Eingaben bzw. Ereignissen, z.B. gemäß der zuvor erläuterten Sequenz, mittels Robotic Process Automation erfolgen. Dies kann auch als Process Replay bezeichnet werden.

Die Erfindung wird anhand von Ausführungsbeispielen näher erläutert. Die Figuren zeigen:
- Fig. 1: eine schematische Darstellung einer Ausführungsform einer Vorrichtung zum Testen eines Datenbankverwaltungssystems und
- Fig. 2: eine schematische Darstellung einer weiteren Ausführungsform einer Vorrichtung zum Testen eines Datenbankverwaltungssystems.

Nachfolgend bezeichnen gleiche Bezugszeichen Elemente mit gleichen technischen Merkmalen.

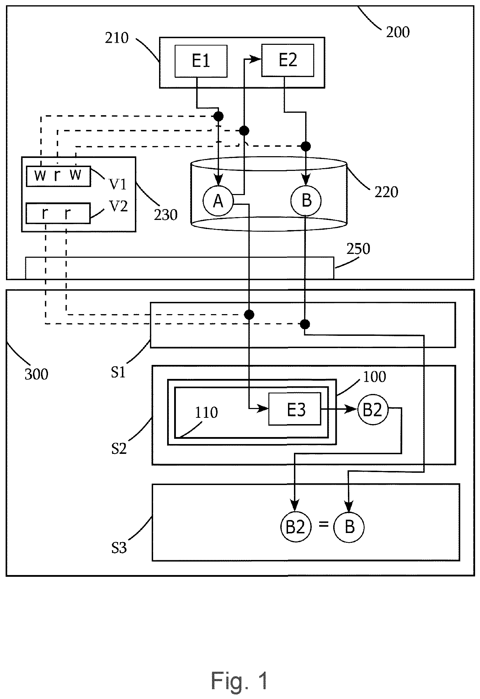

Fig. 1 zeigt eine schematische Darstellung einer Ausführungsform einer Vorrichtung 300 zum Testen eines Datenbankverwaltungssystems 100. Die Ausführungsform der Vorrichtung 300 ist dazu ausgebildet, ein Verfahren zum Testen des Datenbankverwaltungssystems 100 auszuführen. Die Vorrichtung 300 kann Hardwarekomponenten (nicht dargestellt) wie z.B. eine Recheneinrichtung und eine Speichereinrichtung aufweisen, um das zu testende Datenbankverwaltungssystem 100 zu hosten und das Verfahren auszuführen. Das Verfahren kann z.B. als ein computerimplementiertes Testprogramm auf der Vorrichtung 300 ausgeführt werden und umfasst mehrere Schritte, die im Folgenden erläutert werden.

In einem Schritt S1 wird mindestens ein Testdatenobjekt bereitgestellt, um das Datenbankverwaltungssystem 100 in Abhängigkeit des Testdatenobjekts zu testen. Zum Bereitstellen des Testdatenobjekts wird ein bereits verifiziertes Datenbankverwaltungssystem 200 genutzt.

Das verifizierte Datenbankverwaltungssystem 200 umfasst mehrere Softwarekomponenten, die auf einem separaten Server (nicht dargestellt) oder ebenfalls auf der Vorrichtung 300 gehostet sein können. Die Softwarekomponenten des verifizierten Datenbankverwaltungssystems 200 sind z.B. eine als Backend ausgebildete Systemkomponente 210, eine als SAP-HANA-Datenbank ausgebildete Datenbankkomponente 220 sowie eine als Identity-and-Access-Management (IAM) ausgebildete Zugriffsverwaltungskomponente 230.

Die Systemkomponente 210 des verifizierten Datenbankverwaltungssystems 220 interagiert gemäß einer originären Vorgabe V1 der Zugriffsverwaltungskomponente 230 mit der Datenbankkomponente 220. Die originäre Vorgabe V1 gibt nutzerspezifische Zugriffsrechte für das verifizierte Datenbankverwaltungssystem 220 vor. Dies ist in Fig.1 durch "r" für "read" und "w" für "write" gekennzeichnet. Welcher Nutzer allerdings welche Zugriffsrecht hat, kann variieren und ist der besseren Übersicht halber in Fig. 1 nicht dargestellt. Beispielsweise können einige Nutzer die Rolle "Sachbearbeiter" zugewiesen bekommen, die zugriffsbeschränkte Schreib- und Leserechte umfasst, während andere Nutzer die Rolle "Führungskraft" zugewiesen bekommen, die zugriffsunbeschränkte Schreib- und Leserechte umfasst.

Zum Bereitstellen des Testdatenobjekts wird ein Datenobjekt A aus der Datenbankkomponente 220 des verifizierten Datenbankverwaltungssystems 200 als das Testdatenobjekt ausgelesen.

Das Datenobjekt A umfasst z.B. binär kodierte Zahlen und Texte, die einen Produktions- oder Unternehmensprozess teilweise repräsentieren. Beispielsweise kann das Datenobjekt A als Zahl einen mit dem Unternehmensprozess erzielten Umsatz beinhalten. Weiter beispielsweise kann das Testdatenobjekt als Text eine Bezeichnung des Unternehmensprozess, sowie einen Namen des Nutzers, der die Zahl des erzielten Umsatzes über ein Frontend (nicht dargestellt) bzw. eine Benutzeroberfläche der verifizierten Datenbankkomponente 220 eingegeben hat, sowie das hierzu genutzte Zugriffsrechts beinhalten. Die Eingabe bzw. dieses Event ist in Fig. 1 als Ereignis E1 gekennzeichnet. Das Datenobjekt A kann das Ereignis E1 z.B. als Zeitstempel ebenfalls umfassen, sodass die Umstände, unter welchen das Datenobjekt A erzeugt wurde, eindeutig nachvollziehbar sind.

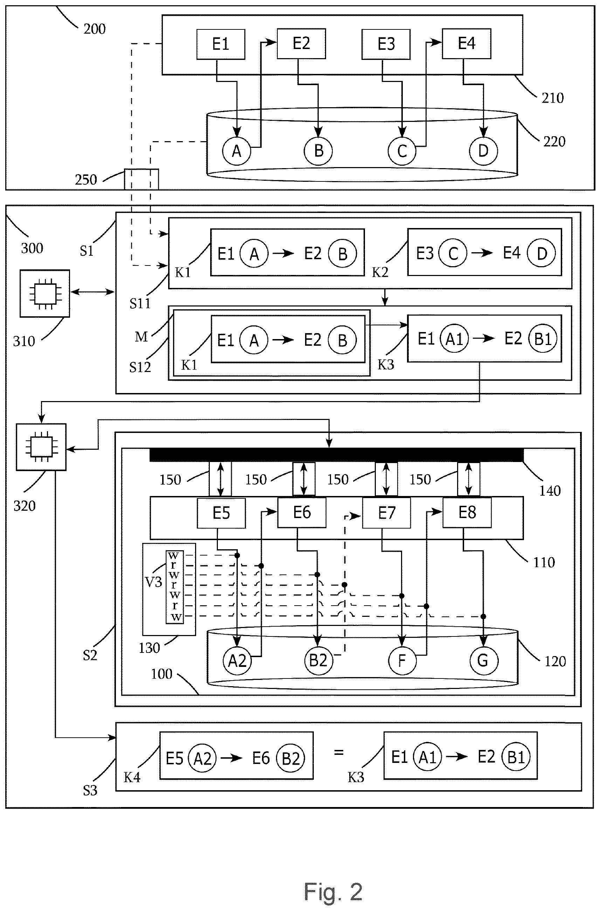

Ferner ist in der Datenbankkomponente 220 ein weiteres binär kodiertes Datenobjekt B gespeichert, welches z.B. einen Jahresabschluss eines Unternehmens sowie einen Namen des Nutzers, der den Jahresabschluss über ein Frontend (nicht dargestellt) bzw. eine Benutzeroberfläche der verifizierten Datenbankkomponente 220 erstellt hat, sowie das hierzu genutzte Zugriffsrechts beinhalten. Das Erstellen des Jahresabschlusses ist in Fig. 1 durch das Ereignis E2 gekennzeichnet. Da der Jahresabschluss eine Größe ist, die z.B. von dem mit dem Unternehmensprozess erzielten Umsatz abhängig ist, wurde zum Erzeugen des Datenobjekts B das Datenobjekt A durch die Systemkomponente 210 des verifizierten Datenbankverwaltungssystems 200 ausgelesen und in dem Ereignis E2 weiterverarbeitet. Dies ist in Fig. 2 durch einen Pfeil von dem Datenobjekt A zu dem Ereignis E2 dargestellt.

Zum Auslesen des Datenobjekts A kann das zu testende Datenbankverwaltungssystem 100 gemäß einer modifizierten Vorgabe V2 der Zugriffsverwaltungskomponente 230 auf die verifizierte Datenbankkomponente 220 zugreifen. Der Zugriff kann z.B. über eine als API ausgebildete Kommunikationsschnittstelle 250 des verifizierten Datenbankverwaltungssystems 200 erfolgen. Auf diese Weise kann sichergestellt werden, dass das bereitgestellte Testdatenobjekt besonders aktuell ist. Insbesondere kann eine als Backend ausgebildete Systemkomponente 110 des zu testenden Datenbankverwaltungssystems 100 parallel zu der im Betrieb befindlichen Systemkomponente 210 des verifizierten Datenbankverwaltungssystems auf die verifizierte Datenbankkomponente 220 zugreifen, um das Datenobjekt A auszulesen.

Die modifizierte Vorgabe V2 erlaubt Zugriffe, insbesondere mit nutzerspezifischen Zugriffsrechten, auf das zu testende Datenbankverwaltungssystem 100. Die Zugriffsrechte beschränken sich jedoch auf Leserechte. Dies ist in Fig.1 durch "r" für "read" gekennzeichnet. Hierdurch kann der Zugriff auf die verifizierte Datenbankkomponente 220 begrenzt werden, um z.B. eine Kompromittierung der verifizierten Datenbankkomponente 220 mit nicht verifizierten Schreibvorgängen zu verhindern. Das Leserecht kann derart ausgebildet sein, dass die Datenobjekte A, B zugriffsunbeschränkt ausgelesen werden können. Die modifizierte Vorgabe V2 kann umfassen, dass nur spezifische Nutzer, insbesondere dieselben Nutzer des verifizierten Datenbankverwaltungssystems, die Lesevorgänge ausführen können, um z.B. den Zugriff auf sensible Informationen zu begrenzen. Es ist jedoch auch möglich, dass das Testprogramm einen oder mehrere Nutzer des zu testenden Datenbankverwaltungssystems simuliert, um Zugriffsprobleme - z.B. bei Abwesenheit eines Nutzers - zu vermeiden.

In einem Schritt S2 wird das Datenbankverwaltungssystem 100 in Abhängigkeit des bereitgestellten Testdatenobjekts getestet. Das Testen ist beispielsweise notwendig, da in der Systemkomponente 110 des zu testenden Datenbankverwaltungssystems 100 Funktionalitäten, die z.B. das Erstellen des Jahresabschlusses unterstützen, gegenüber den Funktionalitäten des verifizierten Datenbankverwaltungssystems 200 überarbeitet worden sein können. Um sicherzustellen, dass diese überarbeiteten Funktionalitäten den Jahresabschluss unter Berücksichtigung des erzielten Umsatzes dennoch korrekt erstellen, wird das Datenobjekt A als Testdatenobjekt in einem Ereignis E3 zu einem Ausgabedatenobjekt B2 weiterverarbeitet. Das erzeugte Ausgabedatenobjekt B2 kann z.B. in einem Zwischenspeicher (nicht dargestellt) der Vorrichtung 300 gespeichert werden.

In einem Schritt S3 wird das Ausgabedatenobjekt B2 in Abhängigkeit des ebenfalls als Testdatenobjekt ausgelesenen Datenobjekts B verifiziert, indem das Ausgabedatenobjekt B2 mit dem Datenobjekt B verglichen wird.

Für das Verifizieren kann ein Wert in dem Ausgabedatenobjekt B2 - wie z.B. der Wert des mit dem zu testenden Datenbankverwaltungssystem 100 erstellten Jahresabschlusses - mit dem entsprechenden Wert in dem Datenobjekt B abgeglichen werden. Das Verifizieren erfolgt z.B. gemäß einem Schwellenwertkriterium, wobei das Schwellenwertkriterium erfüllt ist, wenn der Wert des Ausgabedatenobjekts B2 um nicht mehr als einen vorbekannten Schwellenwert von dem Wert des Datenobjekts B abweicht. Hierdurch kann sichergestellt werden, dass das Datenobjekt A in dem Ereignis E3 korrekt zu dem Ausgabedatenobjekt B2 weiterverarbeitet worden ist.

Ein erfolgreiches Verifizieren kann umfassen, dass das zu testende Datenbankverwaltungssystem 100 als verifiziert zum Einsatz in einer Produktionsumgebung freigegeben wird.

Fig. 2 zeigt eine schematische Darstellung einer weiteren Ausführungsform einer Vorrichtung 300 zum Testen eines Datenbankverwaltungssystems 100. Die weitere Ausführungsform der Vorrichtung 300 ist dazu ausgebildet, ein Verfahren zum Testen des Datenbankverwaltungssystems 100 auszuführen.

Die Vorrichtung 300 kann mehrere Hardwarekomponenten aufweisen wie z.B. eine Recheneinrichtung (nicht dargestellt) und eine Speichereinrichtung (nicht dargestellt), um das zu testende Datenbankverwaltungssystem 100 zu hosten und das in Fig. 2 dargestellte Verfahren z.B. als Testprogramm auszuführen. Das Verfahren umfasst mehrere Schritte, die im Folgenden erläutert werden.

In einem Schritt S1 wird eine Sequenz K3 von Testdatenobjekten durch die Nutzung eines bereits verifizierten Datenbankverwaltungssystems 200 für das Testen des zu testenden Datenbankverwaltungssystems 100 bereitgestellt. Der Schritt S1 umfasst mehrere Teilschritte S11, S12, die nachfolgend erläutert werden.

Das verifizierte Datenbankverwaltungssystem 200 umfasst mehrere Softwarekomponenten, die auf einem separaten Server (nicht dargestellt) oder ebenfalls auf der Vorrichtung 300 gehostet sein können. Die Softwarekomponenten des verifizierten Datenbankverwaltungssystems 200 sind z.B. eine als Backend ausgebildete Systemkomponente 210 und eine als SAP-HANA-Datenbank ausgebildete Datenbankkomponente 220. In der Datenbankkomponente 220 können mehrere Datenobjekte A bis D gespeichert sein. Die Datenobjekte A bis D können - wie bereits zu Fig. 1 erläutert - Werte umfassen, die zumindest teilweise einen Geschäftsprozess repräsentieren wie z.B. ein erzielter Umsatz oder ein Jahresabschluss. Die Datenobjekte A und B können in aufeinanderfolgenden Ereignissen E1 und E2 erzeugt werden und ein aktuelles Geschäftsjahr betreffen. Die Datenobjekte C und D können in aufeinanderfolgenden Ereignissen E3 und E4 erzeugt werden und ein vergangenes Geschäftsjahr betreffen. Die Ereignisse E1 bis E4 können z.B. Eingaben unterschiedlicher Nutzer des verifizierten Datenbankverwaltungssystems 200 repräsentierten. Die Datenobjekte A bis D können die Ereignisse E1 bis E4 jeweils z.B. als Logdateien beinhalten.

Das zu testende Datenbankverwaltungssystem 100 ist ähnlich zu dem verifizierten Datenbankverwaltungssystem 200 aufgebaut. Das zu testende

Datenbankverwaltungssystem 100 umfasst ebenfalls mehrere Softwarekomponenten, unter anderem eine als Frontend ausgebildete Systemkomponente 140, sowie eine als Backend ausgebildete Systemkomponente 110, eine als SAP-HANA-Datenbank ausgebildete Test-Datenbankkomponente 120 sowie eine als Identity-and-Access-Management (IAM) ausgebildete Zugriffsverwaltungskomponente 130.

In dem Teilschritt S11 werden die Sequenzen K1, K2 durch sogenanntes Process-Mining erzeugt. Hierzu weist die Vorrichtung 300 ein als Mikroprozessor ausgebildetes Mittel 310 zum Process-Mining auf, um die Vielzahl von Sequenzen K1, K2 zu erzeugen. Jede Sequenz K1, K2 kann einen Geschäftsprozess repräsentieren, in welchen z.B. mehrere Nutzer des verifizieren Datenbankverwaltungssystems 200 involviert sein können. In Fig. 1 sind zwar nur zwei Sequenzen K1, K2 in Fig. 1 dargestellt, die Vielzahl von Sequenzen K1, K2 kann jedoch mehrere tausend oder Millionen von Sequenzen (nicht dargestellt) umfassen.

Die Sequenzen K1, K2 können z.B. derart erzeugt werden, dass die chronologischen und/oder kausalen Abfolgen, unter welchen die Datenobjekte A bis D erzeugt wurden, den jeweiligen Geschäftsprozess nachvollziehbar abbilden. Die Sequenzen K1, K2 können daher auch als Spuren bzw. "Traces" bezeichnet werden.

Beispielsweise gibt die Sequenz K1 an, dass durch das Ereignis E1 das Datenobjekt A erzeugt wurde, wobei unter Berücksichtigung des Datenobjekts A in dem weiteren Ereignis E2 das Datenobjekt B erzeugt wurde. Weiter beispielsweise gibt die Sequenz K2 an, dass unabhängig von den Datenobjekten A, B durch das weitere Ereignis E3 das Datenobjekt C erzeugt wurde, wobei unter Berücksichtigung des Datenobjekts C in dem weiteren Ereignis E4 das Datenobjekt D erzeugt wurde. Zum Erzeugen der Sequenzen K1, K2 kann das verifizierte Datenbankverwaltungssystem 200 genutzt werden. Beispielsweise können zum Erzeugen der Sequenzen K1, K2 die Datenobjekte A bis D aus der verifizierten Datenbankkomponente 220 ausgelesen werden. Um die Sequenzen K1, K2 erzeugen zu können, kann das Mittel 310 mit der Systemkomponente 210 und/oder der Datenbankkomponente 220 des verifizierten Datenbankverwaltungssystems über eine als z.B. API ausgebildete Kommunikationsschnittstelle 250 des verifizierten Datenbankverwaltungssystems 200 kommunizieren und z.B. die Datenobjekte A bis D auslesen.

Insbesondere können aus den Sequenzen K1, K2 auch weitere Sequenzen (nicht dargestellt) synthetisch erzeugt werden. Das Erzeugen der weiteren Sequenzen kann z.B. mit Hilfe statistischer Methoden erfolgen, um z.B. statistische oder mathematische Eigenschaften der Sequenzen K1, K2 auf die weiteren Sequenzen zu übertragen. Das Mittel 310 zum Process-Mining kann dazu ausgebildet sein, die weiteren Sequenzen zu erzeugen.

In dem Teilschritt S12 wird die Sequenz K1 als die Sequenz K3 für das Testen vorbereitet. Der Teilschritt S12 kann auch als Preprocessing bezeichnet werden. Hierzu wird aus der Vielzahl von Sequenzen K1, K2 zunächst eine Menge M von relevanten Sequenzen identifiziert - wobei die Menge M in Fig. 1 aus Gründen der Übersicht lediglich die Sequenz K1 aufweist. Die Sequenz K1 kann z.B. als relevant identifiziert werden, da die Datenobjekte A, B sich auf das aktuelle Geschäftsjahr beziehen, während sich die Datenobjekte C, D auf das vergangene Geschäftsjahr beziehen und daher nicht mehr aktuell sind. Das Identifizieren kann z.B. durch das Mittel 310 des Process-Mining erfolgen.

Die Sequenz K1 weist ferner eine oder mehrere invariante Eigenschaft(en) auf. Eine invariante Eigenschaft kann z.B. die chronologische und/oder kausale Abfolge der Datenobjekte A, B sein. Diese Abfolge kann auch als Struktur der Sequenz K1 bezeichnet werden. Beispielsweise kann das Datenobjekt B durch die Weiterverarbeitung des zuvor erzeugten Datenobjekts A erzeugt worden sein. Eine weitere mögliche invariante Eigenschaft kann sein, dass ein Wert des Datenobjekts A - z.B. eine erste Kostenstelle - und ein Wert des Datenobjekts B - z.B. eine zweite Kostenstelle - in Form einer Summe verknüpft werden, wobei die Form als invariant bestimmt wird, sodass die Summanden (erste Kostenstelle und zweite Kostenstelle) zwar verändert werden können, ihre Verknüpfung als Summanden sich jedoch nicht mehr verändern kann.

In dem Teilschritt S12 werden die Datenobjekte A, B transformiert, sodass eine transformierte Sequenz K3 von Datenobjekten A1, A2 zum Testen bereitgestellt werden kann. Denn die Datenobjekte A, B können jeweils Werte enthalten, die für sich genommen eine sensible Information des Geschäftsprozesses darstellen - wie z.B. die zuvor erläuterten Kostenstellen oder Umsatzzahlen bzw. Jahresabschlüsse. Durch das Transformieren werden den Datenobjekten A1, B1 beispielsweise andere Werte zugewiesen, ohne die invariante Eigenschaft(en) zu verändern. Hierdurch kann das Testen z.B. ohne eine Offenlegung der zuvor erläuterten sensiblen Informationen erfolgen und der Zusammenhang zwischen den Datenobjekten A, B und/oder die Summe der Werte der Datenobjekte A und B bleibt erhalten. Auch kann ein Speicherbedarf reduziert werden. Somit wird durch das Transformieren die Testqualität nicht beeinträchtigt. Das Transformieren kann regelbasiert oder durch ein Verfahren des maschinellen Lernens erfolgen. Für das Transformieren können statistische Methoden eingesetzt werden, die z.B. Mittelwerte aus Werten der Datenobjekte A und B erzeugen und/oder Werte normieren, um diese zu transformieren. Das Mittel 310 zum Process-Mining kann dazu ausgebildet sein, das Transformieren auszuführen.

In einem Schritt S2 wird das Datenbankverwaltungssystem 100 in Abhängigkeit der bereitgestellten Sequenz K von Testdatenobjekten A1, B1 getestet. Das Testen kann - wie zu Fig. 1 bereits erläutert - dem Zweck dienen, die korrekte Arbeitsweise von z.B. überarbeiteten Funktionalitäten des zu testenden Datenbankverwaltungssystems 100 sicherzustellen. Beispielsweise erfolgt das Testen, indem zwei Ausgabedatenobjekte A2, B2 gemäß der invarianten Eigenschaft der bereitgestellten Sequenz K3 erzeugt werden, z.B. indem Ereignisse in dem zu testenden Datenbankverwaltungssystem 100 simuliert werden, die den Ereignissen E1, E2 zur Erzeugung der Datenobjekte A, B durch das verifizierte Datenbankverwaltungssystem 200 entsprechen.

Für das Testen weist die Vorrichtung 300 ein z.B. als Mikroprozessor ausgebildetes Mittel 320 zur robotischen Prozessautomatisierung auf. Die robotische Prozessautomation kann auch als Robotic Process Automotation bezeichnet werden und dient dazu, das Testen automatisiert auszuführen. Denn das Mittel 320 ist dazu ausgebildet, die als Backend ausgebildete Systemkomponente 110 des zu testenden Datenbankverwaltungssystems 100 zu steuern. Zu diesem Zwischen interagiert das Mittel 320 mit der als Frontend bzw. Benutzeroberfläche ausgebildeten Systemkomponente 140.

Das Mittel 320 kann zu Testzwecken einen oder mehrere Nutzer des zu testenden Datenbankverwaltungssystems 100 unter Berücksichtigung einer veränderten Vorgabe V3 simulieren. Denn während des Testens greift die Systemkomponente 110 des zu testenden Datenbankverwaltungssystems 100 gemäß der veränderten Vorgabe V3 der Zugriffsverwaltungskomponente 130 auf die Test-Datenbankkomponente 120 des zu testenden Datenbankverwaltungssystems 100 zu. Die veränderte Vorgabe V3 erlaubt es z.B. gegenüber der originären Vorgabe V1 oder modifizierten Vorgabe V2, dass die simulierten Nutzer, die z.B. durch das Mittel 320 zur robotischen Prozessautomatisierung gesteuert werden, die Datenobjekte A2, B2, F, G in die Test-Datenbankkomponente 120 schreiben und auch auslesen können. Dies ist in Fig. 2 durch die "w" für "write" und "r" für "read" gekennzeichnet. Hierdurch lassen sich Zugriffsprobleme beim Testen vermeiden. Die veränderte Vorgabe V3 kann jedoch auch als modifizierte Vorgabe V3 bezeichnet werden.

Eine Kommunikation zwischen den Systemkomponenten 140, 110 erfolgt über die als API ausgebildeten Kommunikationsschnittstellen 150, sodass Eingaben (Inputs) seitens des Mittels 320 in der Systemkomponente 110 zu Ausgaben (Outputs) weiterverarbeitet werden können. Ferner können die Ausgaben an die Benutzeroberfläche ausgegeben werden, sodass das Mittel 320 die Möglichkeit hat, die Ausgaben wahrzunehmen und seinerseits weiterzuverarbeiten. Dies ist in Fig. 1 als ein Doppelpfeil zwischen dem Mittel 320 und der Systemkomponente 140 dargestellt.

Um mit dem Testen zu beginnen, kann das Mittel 320 z.B. in einem Ereignis E5 das Ausgabedatenobjekt A2 erzeugen und in die Test-Datenbankkomponente 120 schreiben, wobei das Ereignis E5 das Ereignis E1 simuliert, welches unter Nutzung des verifizierten Datenbankverwaltungssystems 200 das Datenobjekt A erzeugt. Das Ausgabedatenobjekt A2 wird wiederum in einem Ereignis E6 zu einem Ausgabedatenobjekt B2 weiterverarbeitet, wobei das Ereignis E6 das Ereignis E2 simuliert, welches unter Nutzung des verifizierten Datenbankverwaltungssystems 200 das Datenobjekt B erzeugt. Das erzeugte Ausgabedatenobjekt B2 kann seinerseits in die Test-Datenbankkomponente 120 geschrieben werden. Hierbei folgt das Mittel 320 der chronologischen und kausalen Abfolge, die durch invariante Eigenschaft der Sequenz K3 vorgegeben ist. Die Ausgabedatenobjekte A2, B2 werden somit gemäß der invarianten Eigenschaft der Sequenz K3 erzeugt. Insbesondere ergibt sich hierdurch eine Sequenz K4 von Ausgabedatenobjekten A2, B2.

In einem Schritt S3 kann in Abhängigkeit der bereitgestellten Sequenz K3 verifiziert werden, ob die Ausgabedatenobjekt A2, B2 gemäß der invarianten Eigenschaft erzeugt wurden. Hierzu können z.B. die Sequenzen K3 und K4 gegeneinander abgeglichen werden.

Zum Verifizieren kann z.B. ein Wert des Ausgabedatenobjekts A2 - wie z.B. der Wert einer ersten Kostenstelle - mit dem entsprechenden Wert in dem Datenobjekt B - wie z.B. der Wert einer zweiten Kostenstelle - addiert werden, um eine Summe zu erhalten. Da die invariante Eigenschaft der bereitgestellten Sequenz K3 eine Verknüpfung der Werte in Form einer Summe sein kann, kann geprüft werden, ob in der Sequenz K3 die Werte als Summe verknüpft wurden. Insbesondere kann die Summe der Werte der Ausgabedatenobjekte A2, B2 mit der Summe der Werte der Datenobjekte A1, B1 abgeglichen werden. Hierdurch kann sichergestellt werden, dass das Datenobjekt A2 in dem Ereignis E6 korrekt zu dem Ausgabedatenobjekt B2 weiterverarbeitet worden ist. Weiterhin kann verifiziert werden, ob die durch die bereitgestellte Sequenz K3 chronologische und kausale Abfolge beim Erzeugen der Sequenz K4 eingehalten worden ist, indem z.B. ein Zeitstempel der Ereignisse E5, E6 mit einem Zeitstempel der Ereignisse E1, E2 abgeglichen wird.

Das Ausgabedatenobjekt B2 wird in dem in Fig. 2 gezeigten Verfahren ferner als ein weiteres Testdatenobjekt für ein weiteres Testen des Datenbankverwaltungssystems 100 bereitgestellt. Dies ist in Fig. 2 durch einen gestrichelten Pfeil von dem Ausgabedatenobjekt B2 zu dem Ereignis E7 gekennzeichnet. Insbesondere kann durch die Sequenz K4 von Ausgabedatenobjekten A2, B2 für das weitere Testen bereitgestellt werden. Hierdurch lässt sich die Testdatenbankkomponente 120 mit weiteren Ausgabedatenobjekten F, G befüllen und das Testen weiterer - z.B. neu entwickelter Funktionalitäten testen oder das Testen iterativ auszuführen.

Insbesondere hat das Testen und/oder das weitere Testen gemäß der veränderten Vorgabe V3 den Vorteil, dass z.B. ein Nutzer das Testprogramm bedienen kann, der z.B. gemäß der originären Vorgabe V1 (vgl. Fig. 1) keinen Zugriff auf die Ausgabedatenobjekte A2, B2, F, G gehabt hätte und die weiteren Funktionalitäten nicht benutzen könnte.

### Bezugszeichenliste

- 100: zu testendes Datenbankverwaltungssystem
- 110: zu testende Systemkomponente
- 120: Testdatenbankkomponente
- 130: Zugriffsverwaltungskomponente
- 140: weitere zu testende Systemkomponente
- 150: Kommunikationsschnittstelle
- 200: verifiziertes Datenbankverwaltungssystem
- 210: verifizierte Systemkomponente
- 220: verifizierte Datenbankkomponente
- 230: verifizierte Zugriffsverwaltungskomponente
- 250: Kommunikationsschnittstelle
- 300: Vorrichtung
- 310: Mittel zum Process-Mining
- 320: Mittel zur robotischen Prozessautomation
- A bis D: Datenobjekt
- A1, B1: transformiertes Datenobjekt
- A2, B2: Ausgabedatenobjekt
- F, G: weiteres Ausgabedatenobjekt
- E1 bis E8: Ereignis
- K1 bis K4: Sequenz
- M: Menge
- S1: Schritt
- S11: Teilschritt
- S12: Teilschritt
- S2: Schritt
- S3: Schritt
- V1: originäre Vorgabe
- V2: modifizierte Vorgabe
- V3: veränderte Vorgabe

## Patentansprüche

1. Verfahren zum Testen eines Datenbankverwaltungssystems (100), umfassend die Schritte:
- Bereitstellen (S1) mindestens eines Testdatenobjekts,
- Testen (S2) des Datenbankverwaltungssystems (100) in Abhängigkeit des mindestens einen Testdatenobjekts,
wobei das mindestens eine Testdatenobjekt durch eine Nutzung mindestens eines bereits verifizierten Datenbankverwaltungssystems (200) bereitgestellt wird.

2. Verfahren nach Anspruch 1, **dadurch gekennzeichnet, dass** mindestens ein Datenobjekt (A, B) aus mindestens einer verifizierten Datenbankkomponente (220) als das mindestens eine Testdatenobjekt bereitgestellt wird.

3. Verfahren nach Anspruch 2, **dadurch gekennzeichnet, dass** das zu testende Datenbankverwaltungssystem (100) gemäß mindestens einer modifizierten Vorgabe (V2) mindestens einer Zugriffsverwaltungskomponente (130, 230) auf die verifizierte Datenbankkomponente (220) zugreift.

4. Verfahren nach einem der vorangegangenen Ansprüche, **dadurch gekennzeichnet, dass** durch das Testen (S2) mindestens ein Ausgabedatenobjekt (B2) erzeugt wird, wobei das mindestens eine Ausgabedatenobjekt (B2) in Abhängigkeit des mindestens einen Testdatenobjekts verifiziert wird.

5. Verfahren nach einem der vorangegangenen Ansprüche, dass mindestens eine Sequenz (K1) von Datenobjekten (A, B) durch die Nutzung des bereits verifizierten Datenbankverwaltungssystems (200) erzeugt wird, wobei das mindestens eine Testdatenobjekt als mindestens ein Datenobjekt (B) der mindestens einen Sequenz (K1) bereitgestellt wird.

6. Verfahren nach einem der vorangegangen Ansprüche, **dadurch gekennzeichnet, dass** mindestens eine Sequenz (K1) von Datenobjekten (A, B) als Sequenz (K3) von Testdatenobjekten für das Testen (S2) bereitgestellt wird.

7. Verfahren nach Anspruch 6, **dadurch gekennzeichnet, dass** die mindestens eine Sequenz (K1) mindestens eine invariante Eigenschaft aufweist, wobei die Datenobjekte (A, B) der mindestens einen Sequenz (K1) transformiert werden, bevor die mindestens eine Sequenz (K1) als Sequenz (K3) von Testdatenobjekten bereitgestellt wird, wobei durch das Transformieren die mindestens eine invariante Eigenschaft erhalten bleibt.

8. Verfahren nach einem der Ansprüche 6 oder 7, **dadurch gekennzeichnet, dass** eine Vielzahl von Sequenzen (K1, K2) von Datenobjekten (A, B, C, D) durch die Nutzung des bereits verifizierten Datenbankverwaltungssystems (200) erzeugt wird, wobei aus der Vielzahl von Sequenzen (K1, K2) mindestens eine Menge (M) von relevanten Sequenzen (K1) identifiziert wird, wobei die bereitgestellte mindestens eine Sequenz (K1) eine Sequenz der Menge (M) ist.

9. Verfahren nach einem der Ansprüche 6 bis 8, **dadurch gekennzeichnet, dass** durch das Testen (S2) mindestens ein Ausgabedatenobjekt (A2, B2) gemäß mindestens einer Sequenz (K1) mit mindestens einer invarianten Eigenschaft erzeugt wird, wobei das mindestens eine Ausgabedatenobjekt (A2, B2) gemäß der invarianten Eigenschaft erzeugt wird.

10. Verfahren nach einem der vorangegangenen Ansprüche, **dadurch gekennzeichnet, dass** durch das Testen mindestens ein Ausgabedatenobjekt (A2, B2) erzeugt wird, wobei das mindestens eine Ausgabedatenobjekt (A2, B2) als mindestens ein weiteres Testdatenobjekt für ein weiteres Testen bereitgestellt wird.

11. Verfahren nach einem der vorangegangenen Ansprüche, **dadurch gekennzeichnet, dass** eine Systemkomponente (110) des zu testenden Datenbankverwaltungssystems (100) gemäß mindestens einer veränderten Vorgabe (V3) mindestens einer Zugriffsverwaltungskomponente (130) auf mindestens eine Datenbankkomponente (120) des zu testenden Datenbankverwaltungssystems (100) zugreift.

12. Verfahren nach Anspruch 11, **dadurch gekennzeichnet, dass** das Bereitstellen (S1) und/oder Testen (S2) über mindestens eine API-Schnittstelle (150) des zu testenden Datenbankverwaltungssystems (100) erfolgt.

13. Verfahren nach Anspruch 11 oder 12, **dadurch gekennzeichnet, dass** das Bereitstellen (S1) und/oder das Testen (S2) mittels Robotic Process Automation erfolgt.

14. Vorrichtung (300) zum Testen eines Datenbankverwaltungssystems (100), wobei die Vorrichtung (300) dazu ausgebildet ist, ein Verfahren gemäß einem der Ansprüche 1 bis 13 auszuführen.

15. Datenbankverarbeitungssystem (100), wobei das Datenbankverwaltungssystem (100) durch ein Verfahren gemäß einem der Ansprüche 1 bis 13 getestet ist.
